# EUROPÄISCHE PATENTANMELDUNG

(11) **EP 3 815 517 A1**
(43) Veröffentlichungstag der Anmeldung: **05.05.2021**
(21) Anmeldenummer: 20000384.6
(22) Anmeldetag: 25.10.2020
(51) Int. Cl.: A01G 17/06

(54) **DRAHTDISTANZHALTER MIT VERSCHLUSS**

(30) Priorität: 30.10.2019 DE 102019007541; 31.03.2020 DE 102020002069
(71) Anmelder: Rembold, Juergen, 74348 Lauffen (DE)
(72) Erfinder: Rembold, Juergen, 74348 Lauffen (DE)
(74) Vertreter: Kern, Hedwig

(57) **Zusammenfassung**

Vorgeschlagen wird ein Drahtdistanzhalter (1) zur variablen Positionierung von Drahtpaaren (2) in Spalieranlagen, insbesondere für den Weinbau, der in einer flachstabartigen Form aus einem Federstahldraht gebildet ist, mit einem, im Wesentlichen in Längsrichtung desselben angeordneten Führungsschlitz (3), wobei in dem Führungsschlitz (3) einer der beiden Drähte des Drahtpaares (2) gleitend verschiebbar ist, und wobei der Führungsschlitz (3) an beiden Enden desselben jeweils einen zur Längsrichtung desselben abgewinkelten Absatz (4) aufweist, dergestalt, dass der verschiebbare Draht in den Absätzen (4) arretierbar ist und wobei der in Längsrichtung des Stabes angeordnete Führungsschlitz (3), an einem Ende desselben eine verschließbare Öffnung zur Aufnahme der beiden Drähte des Drahtpaares (2) aufweist, der dadurch gekennzeichnet ist, dass die verschließbare Öffnung zur Aufnahme der beiden Drähte des Drahtpaares (2) durch eine zur Längsrichtung des Drahtdistanzhalter (1) senkrechte und in der Hauptebene des Drahtdistanzhalters (1) liegenden Abwinkelung der beiden Enden (5) des Federstahldrahtes gebildet ist, und dass ein Verschluss (6) für dieselbe vorgesehen ist, der nach dem Einbringen der beiden Drähte des Drahtpaares (2) in den Führungsschlitz (3) den einen der beiden Drähte des Drahtpaares (2) dauerhaft in einer Ebene senkrecht zur Längsrichtung des Drahtdistanzhalters (1) fixiert und den Führungsschlitz (3) verschließt.

## Beschreibung

Die Anmeldung betrifft einen Drahtdistanzhalter zur variablen Positionierung von Drahtpaaren in Spalieranlagen, insbesondere für den Weinbau.

Spalieranlagen haben im Weinbau in Deutschland, ab etwa Ende der 50er Jahre, die traditionelle Stockkultur weitgehend abgelöst. In Spalieranlagen werden die Rebstöcke in Reihen (Zeilen) gepflanzt, die überwiegend talwärts ausgerichtet sind. In die Reihen der Rebstöcke werden in Abständen Metallpfosten (Stickel) eingegraben oder eingeschlagen. Zwischen diesen werden in unterschiedlichen Höhen Drähte gespannt, die die Triebe der Kletterpflanze Weinrebe halten und/oder führen. Derartige Anlagen ermöglichen die Rebkultur nach der sogenannten Drahtrahmenerziehung, auch als Normalerziehung, Einheitsnormalerziehung, Standardspalier oder VSP Trellis (Vertical Shoot Positioning) bekannt. Sie lassen sich maschinell bearbeiten und sind dadurch den terrassierten traditionellen Anlagen wirtschaftlich überlegen.

Die im Jahreskreis regelmäßig anfallenden Arbeiten im Weinberg umfassen das
- Biegen von ein oder zwei Trieben aus den Stämmchen der Weinreben als Bögen (insbesondere Flachbögen, Halbbögen oder Pendelbögen) auf Spanndraht,
- gegebenenfalls Auszwicken doppelter Triebe,
- Formieren der aus den Bögen wachsenden Triebe in vertikaler Richtung zu einem heckenartigen Aussehen einer schmalen, geraden "Laubwand", in der Regel zu einer Gesamthöhe von etwa 1,90 bis 2,20 m, zumeist von etwa 2,00 m, durch Heften, Stecken oder Binden beziehungsweise zwischen Drähten,
- Ausbrechen und Zurückschneiden von Trieben, zumeist 2- bis 4-mal im Jahr,
- Entfernen von Trieben und Blättern (Laubarbeiten),
- Weinlese sowie
- Schneiden der Weinreben / der einjährigen Triebe nach der Lese bis auf ein oder zwei einjährige Triebe (Ruten) für das Folgejahr.

Bei der sogenannten "Kordon"- Erziehung - Blätter und Früchte wachsen hier aus ein oder zwei waagrechten, streng formierten Stamm-Schenkeln; es sind einseitige Winkel und T-Formen möglich, der senkrechte Stamm bleibt meist unbegrünt - entfällt der erste Arbeitsschritt, das Biegen von ein oder zwei Trieben.

Um die angestrebte "Laubwand"- Form zu erreichen, müssen die Doppeldrähte, nachdem die Triebe dazwischen in vertikaler Richtung hochgewachsen ("eingestreift") sind und die gewünschte Höhe erreicht haben, zusammengefasst bzw. geschlossen werden, wofür eine Vielzahl von Heftsystemen auf dem Markt sind. In dieser Arbeitsphase, der Formierung, ist eine enge Positionierung der Doppeldrähte zueinander erforderlich.

In der Arbeitsphase des Schneidens - zumeist im Winter/zeitigem Frühjahr - stellt sich dagegen die hierzu konträre Anforderung, nämlich, dass der Rebschnitt durch die zuvor, bei der Formierung erforderlichen Drähte, und insbesondere durch eine enge Positionierung derselben, möglichst wenig behindert wird.

Der Fachartikel von Ernst Weinmann et al. "Heftsysteme: Vergleich technischer Entwicklungen" in "Der deutsche Weinbau", 4. 5. 2012, Nr.9, stellt die aktuell verfügbaren Heftsysteme gegenüber, mit dem Fazit, dass es derzeit keine bedeutenden Rationalisierungsmöglichkeiten zu geben scheint.

Es wird festgehalten, dass die Heftarbeiten regelmäßig in der ersten Wachstumsphase der Weinbergarbeit in starker zeitlicher Konkurrenz zum Rebschutz und den verschiedenen Bodenbearbeitungsmaßnahmen stehen. Gleichzeitig nimmt die zeitlich und qualitativ optimale Gestaltung der Heftarbeiten erheblichen Einfluss auf den Erfolg der Rebschutzmaßnahmen und damit auch auf die Beschaffenheit und Qualität und letztlich auf die Verwertung des Lesegutes. Bei größer werdenden Betrieben spielt daher die organisatorische Bewältigung des Zeitkonfliktes und die qualitativ optimale Gestaltung der Heftarbeiten eine sehr große Rolle und trägt erheblich zum wirtschaftlichen Erfolg der weinbaulichen Produktion bei.

Je nach Rebsorte, Schnittvariante und Durchführung der Laubarbeiten kann die Anzahl der Spanndrähte variieren: bekannt sind insbesondere Drahtrahmen mit einem beweglichen Heftdrahtpaar und zwei oder drei festen Rankdrähten, Drahtrahmen mit zwei beweglichen Heftdrahtpaaren und gegebenenfalls einem Rankdraht oder auch vereinfachte Drahtrahmen, die für den Einsatz von rollbaren Kunststoffnetzen ausgelegt sind.

In manchen Weinbauregionen wird die Ausführungsform der Drahtrahmen mit zwei beweglichen Heftdrahtpaaren (und gegebenenfalls ein oder zwei Rankdrähten) ganz überwiegend eingesetzt.

Neben der Gestaltung der Unterstützungsvorrichtungen im Weinbau mit fest platzierten Drähten und dem Einsatz von Heftmaschinen haben sich in den zurückliegenden Jahren, insbesondere mit der starken Umstellung auf Metallpfähle, Heftsysteme mit Federklammern in der weinbaulichen Praxis durchgesetzt.

Entwicklungen auf diesem Gebiet sind zum Beispiel unter den Bezeichnungen Ausleger (Lorenzfeder), IWT Heftfeder, Heftsystem Pfeiffer und Südpfalzwerkstatt Heftdrahthalter auf dem Markt.

Heftdrahthalter sind jedoch nicht billig, müssen unterhalten werden, stören eventuell bei maschinellem Vorschnitt und ermöglichen kein Weghängen der Drähte vor dem Schnitt zur Erleichterung des Rebenherausziehens. Maschinelle Drahtaushebung, z. B. aus der oberen Station, scheidet hier ebenfalls aus. Aber gerade bei weniger aufrechtwachsenden Sorten und dort, wo z. B. wegen ungünstiger Geländeform, Spitzzeilen oder extremen Steigungen der Heftmaschineneinsatz nicht in Frage kommt, können diese Heftdrahthalter eine wertvolle Hilfe darstellen. Ein weiterer Nachteil der Heftdrahthalter besteht in der Gefahr von Schäden an den Bügeln beim Einsatz der Vorschneidemaschinen.

Als weitere Variante wurde daher das Heften mit beweglichen Drähten entwickelt. Die Arbeitsweise sowie Vor- und Nachteile desselben sind z.B. in der Fachpublikation: "Heften mit beweglichen Drähten" von Rudolf Fox, Staatliche Lehr-und Versuchsanstalt für Wein- und Obstbau Weinsberg (LVWO) dargelegt:
Für bewegliche Heftdrähte eignen sich besonders gut aufrecht wachsende Sorten, z.B. Riesling und Lemberger, aber auch der Spätburgunder sowie Müller-Thurgau und Silvaner. Nachdem heute in jungen Anlagen in der Regel Stahlstickel mit Ausstanzungen auch unterhalb der Biegedrähte vorhanden sind, können die Drähte sowohl einfach heruntergehängt als auch, angepasst an die Wuchshöhe, variabel hochgehängt werden. In der Regel sind dabei zwei Heftdrahtpaare ausreichend. Hierbei wird, wie folgt, vorgegangen: Nach der Lese werden die Drähte aus der unteren Heftstation - je nach Sorte und Bogenformierung ca. 20 - 30 cm über dem oberen Biegedraht und somit kaum angerankt - ausgehängt und ca. 20 cm unter dem unteren Biegedraht eingehängt. Am Ende der Zeilen bleiben dabei die Drähte in der Höhe erhalten, lediglich die Kettchen werden "nachgelassen". Beim Rebschnitt, dem Rebenherausziehen sowie Biegen ist damit ein weitgehend " störungsfreies" Arbeiten gegeben. Auch beim Rebenhäckseln oder der Unterstockbearbeitung stören die Drähte nicht, da sie etwa im Bereich um 50 cm über dem Boden fixiert sind. Zum ersten Heftgang wird dieses Drahtpaar "hochgezogen", ca. 20 - 30 cm über dem oberen Biegedraht eingehängt sowie gleichzeitig das in der oberen Heftstation befindliche zweite Heftdrahtpaar "heruntergelegt", bevor sich die jungen Triebe hier anranken können. Um möglichst alle Triebe im Draht dauerhaft zu erfassen, ist es dabei wichtig, die Drähte nicht zu früh hoch zu hängen. Dort, wo Bedenken wegen Bruchgefahr bestehen, kann bereits in Verbindung mit dem Biegen der Draht an jedem 3. - 4. Stickel kurz über dem oberen Biegedraht eingehängt werden und bietet somit bei angepasster Spannung - ähnlich wie bei Verwendung von Heftdrahtfedern - eine Stütze für die heranwachsenden Triebe. Das heruntergelegte Drahtpaar wird so angespannt bzw. eingehängt, dass es nötige Pflegearbeiten mit dem Schlepper nicht stört. Grundsätzlich kann der erste Heftgang mit dem Ausbrechen kombiniert werden, wodurch ein separater Durchgang entfällt. Dies stellt besonders bei größeren Steigungen eine Entlastung dar. Überragen die Triebe die nächst höhere Heftstation - ca. 30 - 40 cm über der ersten - ausreichend, so wird das zweite Heftdrahtpaar hochgezogen. Je nach Laubwandhöhe, Sorte und Wuchs kann dann später nochmals das obere Drahtpaar weiter nach oben verhängt oder bei aufrechtwachsenden Sorten auch belassen werden. Wird z. B. das untere Drahtpaar 30 cm über dem oberen Biegedraht sowie das zweite Heftdrahtpaar nochmals 40 cm darüber eingehängt, so ist es, zumindest bei aufrecht wachsenden Sorten, kaum erforderlich, dieses nochmals weiter nach oben zu hängen. Bei solchen Sorten kann die Laubwand weiter über das obere Heftdrahtpaar hinausragen, ohne Bruchschäden befürchten zu müssen. Ist bei weniger aufrecht wachsenden Sorten ein Hochhängen der zweiten Heftstation erforderlich, wird dies - ebenso wie der zweite Heftgang - dann durchgeführt, bevor sich die Triebe umlegen bzw. abzubrechen drohen.

Aus der nicht vorveröffentlichten deutschen Patentanmeldung 10 2019 007 541.2 ist eine einfache, robuste Vorrichtung für den Einsatz in auch maschinell bearbeitbaren Spalieranlagen, insbesondere für den Weinbau, bekannt, mit der in allen Arbeitsphasen im Jahreskreis eine optimale Positionierung der Doppeldrähte erreicht werden kann, insbesondere sowohl in der Arbeitsphase des Formierens einschließlich des Heftens wie auch in der Arbeitsphase des Schneidens nach der Lese.

Die entsprechende Vorrichtung ist ein Drahtdistanzhalter zur variablen Positionierung von Drahtpaaren in Spalieranlagen, insbesondere für den Weinbau, der in Form eines Stabes ausgebildet ist, mit einem, im Wesentlichen in Längsrichtung des Stabes angeordneten Führungsschlitz, wobei in dem Führungsschlitz jeweils einer oder beide Drähte der Drahtpaares gleitend verschiebbar sind, und wobei der Führungsschlitz an beiden Enden desselben in jeweils einem oder zwei zur Längsrichtung desselben abgewinkelten Absätzen endet, dergestalt, dass die Drähte in den Absätzen arretierbar sind.

Der Drahtdistanzhalter wird einmalig in die Spalieranlage eingebracht, indem beide Drähte jeweils eines Drahtpaares, in den im Wesentlichen in Längsrichtung des Stabes angeordneten Führungsschlitz, eingefädelt werden. Am zweckmäßigsten kann dies vorgenommen werden, indem der Führungsschlitz an seinem einen Ende offen ausgebildet wird, und diese Öffnung anschließend, nachdem die Drähte eingeführt sind, verschlossen wird. In diesem Zustand verbleibt der Drahtdistanzhalter dann über Jahre in der Spalieranlage.

Indem die beiden Drähte jeweils eines Drahtpaares im Führungsschlitz verschiebbar und in den Absätzen des Führungsschlitzes in unterschiedlichen Positionen arretierbar sind, ist es insbesondere möglich, eine enge Positionierung derselben in der Arbeitsphase des Formierens und dagegen eine weite Positionierung derselben in der Arbeitsphase des Schneidens nach der Lese und der Wachstumsphase vor dem Heften, zu gewährleisten.

Dabei können die beiden Drähte des einen Drahtpaares, in den beiden Absätzen am gleichen Ende des Führungsschlitzes, arretiert werden, wodurch eine enge Positionierung derselben, für die Arbeitsphase des Formierens, erreicht wird.

Für die weite Positionierung derselben, in der Arbeitsphase des Schneidens nach der Lese und in der Wachstumsphase vor dem Heften, wird dagegen jeweils ein Draht des Drahtpaares, an jeweils einem Ende des Führungsschlitzes, arretiert.

Der obige Drahtdistanzhalter weist jedoch den Nachteil auf, dass er in der weiten Positionierung der beiden Drähte des Drahtpaares unterschiedliche Winkel zwischen denselben einnehmen kann, mit der Folge, dass dieselben zueinander nicht immer den Maximalabstand aufweisen, der der Länge des Drahtdistanzhalters entspricht, sondern auch deutlich enger zueinander positioniert sein können. Dies kann für die anstehenden Arbeiten nachteilig sein.

Es war demgegenüber Aufgabe der Erfindung, eine verbesserten Drahtdistanzhalter zur Verfügung zu stellen, der gewährleistet, dass in der weiten Positionierung der beiden Drähte des Drahtpaares dieselben stets senkrecht zum Drahtdistanzhalter arretiert sind, mit der Folge, dass dieselben zueinander nicht den Maximalabstand aufweisen, der der Länge des Drahtdistanzhalters entspricht.

Diese Aufgabe wird durch einen Drahtdistanzhalter zur variablen Positionierung von Drahtpaaren in Spalieranlagen, insbesondere für den Weinbau, gelöst, der in einer flachstabartigen Form aus einem Federstahldraht gebildet ist, mit einem, im Wesentlichen in Längsrichtung desselben angeordneten Führungsschlitz, wobei in dem Führungsschlitz einer der beiden Drähte des Drahtpaares gleitend verschiebbar ist, und wobei der Führungsschlitz an beiden Enden desselben jeweils einen zur Längsrichtung desselben abgewinkelten Absatz aufweist, dergestalt, dass der verschiebbare Draht in den Absätzen arretierbar ist und wobei der in Längsrichtung des Stabes angeordnete Führungsschlitz, an einem Ende desselben eine verschließbare Öffnung zur Aufnahme der beiden Drähte des Drahtpaares aufweist, der dadurch gekennzeichnet ist, dass die verschließbare Öffnung zur Aufnahme der beiden Drähte des Drahtpaares durch eine zur Längsrichtung des Drahtdistanzhalter senkrechte und in der Hauptebene des Drahtdistanzhalters liegenden Abwinkelung der beiden Enden des Federstahldrahtes gebildet ist, und dass ein Verschluss für dieselbe vorgesehen ist, der nach dem Einbringen der beiden Drähte des Drahtpaares in den Führungsschlitz den einen der beiden Drähte des Drahtpaares dauerhaft in einer Ebene senkrecht zur Längsrichtung des Drahtdistanzhalters fixiert und den Führungsschlitz verschließt.

Der erfindungsgemäße Drahtdistanzhalter ist aus einem Federstahldraht geformt und hergestellt. Der Federstahldraht hat den wesentlichen Vorteil, dass er, im Gegensatz zu Kunststoff, durch das beim Einsatz von maschinellen Vollerntern unabdingbare Rütteln der Anlage nicht beschädigt wird und entsprechend wenig oder nicht altert und nicht spröde wird, d.h. die Nutzungsdauer ist deutlich höher, im Allgemeinen 30 Jahre oder mehr.

Als Federstahl wird bekanntlich ein Stahl bezeichnet, der im Vergleich zu anderen Stählen eine höhere Elastizitätsgrenze besitzt. Dies wird durch Legierungen ermöglicht, wobei Silizium als Legierungselement besonders vorteilhaft ist. Wichtig ist zudem eine möglichst gleichmäßige Verteilung des Kohlenstoffs (vgl. Auszug aus Wikipedia zu Federstahl).

Besonders bevorzugt sind die Federstähle X12 CrNi17 7 (Werkstoffnummer 1.4310), X7 CrNiAl 17 7 (Werkstoffnummer 1.4568), X6 CrNiMoTi 17 12 2 (Werkstoffnummer 1.4571). Diese Federstähle haben gute mechanische Eigenschaften und sind korrosionsbeständig, zum Teil sind diese Federstähle härtbar.

Der in Längsrichtung des Stabes angeordneten Führungsschlitz des Drahtdistanzhalters weist an einem Ende desselben eine verschließbare Öffnung zur Aufnahme der beiden Drähte des Drahtpaares auf. Über die Öffnung des Führungsschlitzes nach außen wird das Drahtpaar beim Einbringen des Drahtdistanzhalters in die Spalieranlage einmalig in den Führungsschlitz eingeführt, worauf derselbe verschlossen wird und in diesem Zustand während der gesamten Verwendungsdauer des Drahtdistanzhalters in der Spalieranlage verbleibt.

Bevorzugt sind die an den beiden Enden des Führungsschlitzes ausgebildeten Absätze, die jeweils senkrecht zur Längsrichtung desselben abgewinkelt sind, in der Hauptebene des Drahtdistanzhalters und zu einander entgegengesetzten Seiten des Drahtdistanzhalters ausgerichtet. Dadurch werden eine besonders gleichmäßige Beanspruchung des Drahtdistanzhalters und eine exakte Führung der beiden Drähte des Drahtpaares erreicht.

Vorteilhaft ist der Verschluss in Form einer zusammenklappbaren Verschlussplatte ausgebildet, die den dauerhaft zu fixierenden einen Draht des Drahtpaares aufnimmt und zwischen die beiden Enden des Federstahldrahtes in einer Ebene senkrecht zur Längsrichtung des Drahtdistanzhalters verklemmt.

Besonders vorteilhaft sind die beiden Enden des Federstahldrahtes nach der zur Längsrichtung des Drahtdistanzhalters senkrechten und in der Hauptebene des Drahtdistanzhalters liegenden Abwinkelung senkrecht zur Hauptebene des Drahtdistanzhalters abgewinkelt. Dadurch wird eine besonders präzise Positionierung der Verschlussplatte möglich.

Die zusammenklappbare Verschlussplatte, ist besonders vorteilhaft in der Weise ausgebildet, dass sie zwei einander gegenüberliegende, im Wesentlichen rechteckige Großflächen aufweist, mit einem mittigen Scharnier in Querrichtung, wobei
- auf der einen Großfläche parallel zum mittigen Scharnier und zu diesem gleich beabstandet jeweils eine Vertiefung mit jeweils gleichem, halbkreisförmigem Querschnitt zur Aufnahme des zu fixierenden Drahtes des Drahtpaares sowie an einem Ende derselben ein, zwei oder mehrere Zapfen und am gegenüberliegenden Ende dem einen, zwei oder mehreren Zapfen entsprechende Aussparungen zum Verschließen der zusammenklappbaren Verschlussplatte und
- auf der gegenüberliegenden Großfläche symmetrisch zum mittigen Scharnier den zwei Mal senkrecht zur Längsrichtung des Drahtdistanzhalters abgewinkelten beiden Enden des Federstahldrahtes entsprechende Vertiefungen zur Aufnahme derselben vorgesehen sind, dergestalt, dass eine formschlüssige Fixierung des einen Drahtes des Drahtpaares gewährleistet ist.

In einer bevorzugten Ausführungsform ist die zusammenklappbare Verschlussplatte dergestalt ausgebildet, dass auf der einen Großfläche derselben, die parallel zum mittigen Scharnier und zu diesem gleich beabstandet jeweils eine Vertiefung mit jeweils gleichem halbkreisförmigem Querschnitt zur Aufnahme des zu fixierenden Drahtes des Drahtpaares aufweist, an einem Ende derselben zwei Zapfen und am gegenüberliegenden Ende den zwei Zapfen entsprechende Aussparungen zum Verschließen der zusammenklappbaren Verschlussplatte vorgesehen sind.

In einer weiteren bevorzugten Ausführungsform ist die zusammenklappbare Verschlussplatte dergestalt ausgebildet, dass auf der einen Großfläche derselben, die parallel zum mittigen Scharnier und zu diesem gleich beabstandet jeweils eine Vertiefung mit jeweils gleichem, halbkreisförmigem Querschnitt zur Aufnahme des zu fixierenden Drahtes des Drahtpaares aufweist, zwei weitere, ebenfalls parallel zum mittigen Scharnier und zu diesem gleich beabstandet angeordnete Vertiefungen mit vom Querschnitt der ersten Vertiefungen verschiedenen halbkreisförmigem Querschnitt zur Aufnahme des zu fixierenden Drahtes des Drahtpaares vorgesehen sind. Dadurch ist es möglich, den Drahtdistanzhalter flexibel, für Drähte mit unterschiedlichem Durchmesser einzusetzen, insbesondere für die gängigen Drahtdurchmesser von 2,0 mm als auch alternativ von 2,5 mm.

Die zusammenklappbare Verschlussplatte ist bevorzugt aus einem UVstabilen Kunststoff, insbesondere Polyoxymethylene (Kurzzeichen POM) hergestellt. Sie hat im Wesentlichen eine Rechteckform, bevorzugt mit den Maßen L x B x H im Bereich von 46 mm x 25 mm x 4 mm.

Vorteilhaft weist der Drahtdistanzhalter einen Führungsschlitz mit einer oder mehreren Verengungen auf, die ein Verschieben der Drähte nur unter erhöhtem Kraftaufwand erlauben. Dadurch sind auch Zwischenpositionen im Abstand der beiden Drähte zueinander möglich. Die Drähte des Drahtpaares lassen sich dadurch in einer oder mehreren Zwischenpositionen, zwischen der weiten Positionierung beim Schneiden und der engen Positionierung beim Heften, festklemmen. Dies kann vorteilhaft sein, um die noch jungen Triebe gegen Windbruch zu schützen.

Der Federstahldraht weist vorteilhaft einen Durchmesser von 1,5 mm bis 4,0 mm, insbesondere einen Durchmesser von 2,5 mm, oder auch von 2,0 mm, auf.

Der Drahtdistanzhalter hat vorteilhaft eine Länge im Bereich von 220 bis 350 mm, bevorzugt im Bereich von 250 bis 280 mm, besonders bevorzugt von 270 mm, weiter vorteilhaft eine Breite an einem der beiden Enden im Bereich von 20 bis 40 mm, bevorzugt im Bereich von 25 bis 35 mm, besonders bevorzugt von 33 mm und am anderen Ende vorteilhaft eine Breite im Bereich von 10 bis 35 mm, bevorzugt im Bereich von 15 bis 25 mm, besonders bevorzugt von 23 mm.

Der erfindungsgemäße Drahtdistanzhalter ermöglicht eine deutliche Reduzierung von manuellen Arbeitszeiten und damit eine Erhöhung der Wirtschaftlichkeit in Spalieranlagen.

Darüber hinaus ist er, aufgrund seiner Form, ergonomisch handhabbar. Indem er dauerhaft in der Spalieranlage verbleibt, entfällt der Zeitaufwand für ein regelmäßiges Entfernen und Wiedereinbringen wie zum Beispiel bei losen Heftklammern, und es besteht auch nicht die Gefahr von Verlusten.

Die Ausführung des Drahtdistanzhalters in korrosionsbeständigem Federstahl gewährleistet eine Nutzungsdauer des Drahtdistanzhalters die länger ist als die Standzeit einer Rebanlage.

Durch die vorteilhafte Ausgestaltung mit Verschlussplatte wird darüber hinaus gewährleistet, dass in der weiten Positionierung der beiden Drähte des Drahtpaares dieselben stets senkrecht zum Drahtdistanzhalter arretiert sind, mit der Folge, dass dieselben zueinander stets den Maximalabstand aufweisen, der der Länge des Drahtdistanzhalters entspricht.

Die Erfindung wird im Folgenden anhand eines Ausführungsbeispiels und einer Zeichnung näher erläutert.

Es zeigen im Einzelnen:
Figur 1a einen Längsschnitt durch eine beispielhafte Ausführungsform eines erfindungsgemäßen Drahtdistanzhalters,
Figur 1b einen Längsschnitt in einer Ebene senkrecht zu der in Schnittebene in Figur 1a,
Figur 2 eine beispielhafte Ausführungsform einer Verschlussplatte für einen erfindungsgemäßen Drahtdistanzhalter, wobei
Figur 2a die eine Großfläche,
Figur 2c die gegenüberliegende Großfläche,

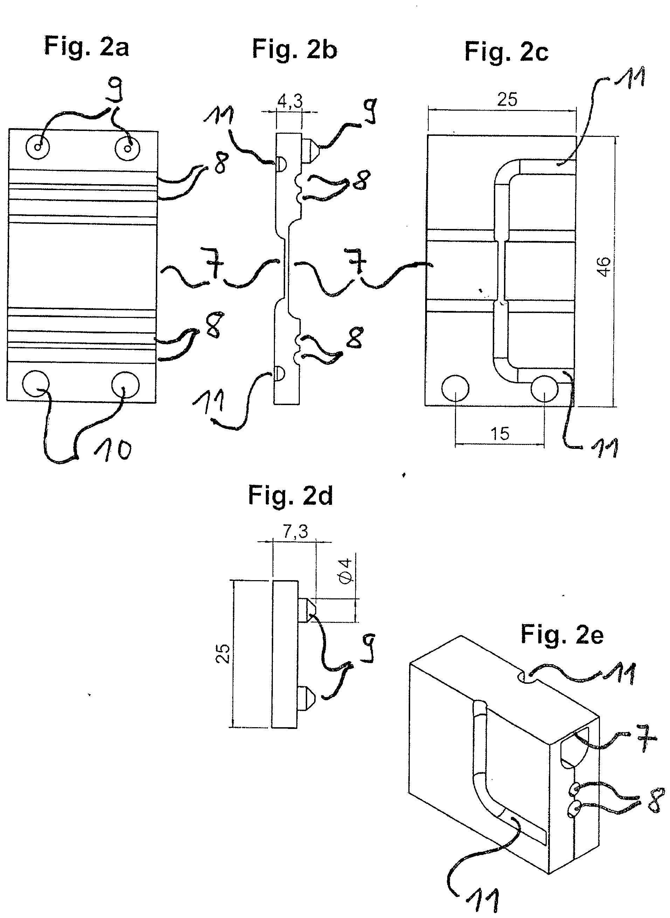

Figur 2b einen Querschnitt in Längsrichtung,
Figur 2d einen Querschnitt senkrecht hierzu, im Bereich der Zapfen, und
Figur 2e die Verschlussplatte in zusammengeklappter Form schematisch darstellt,

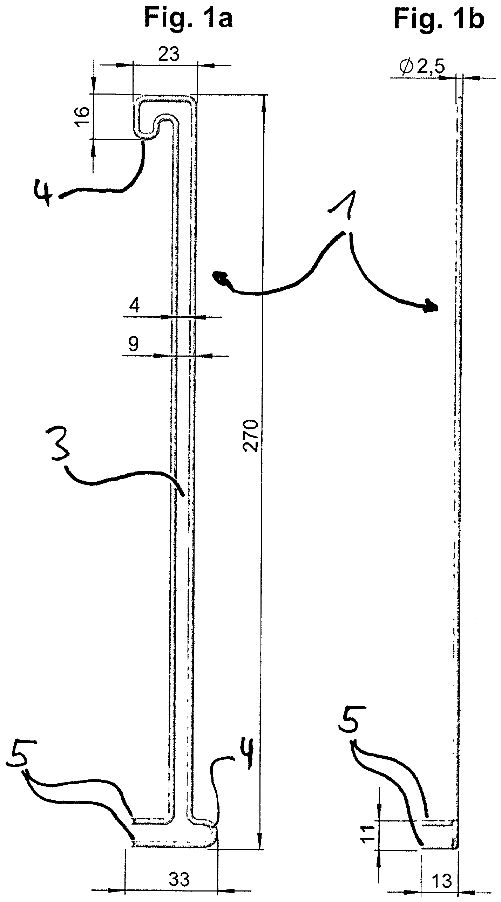

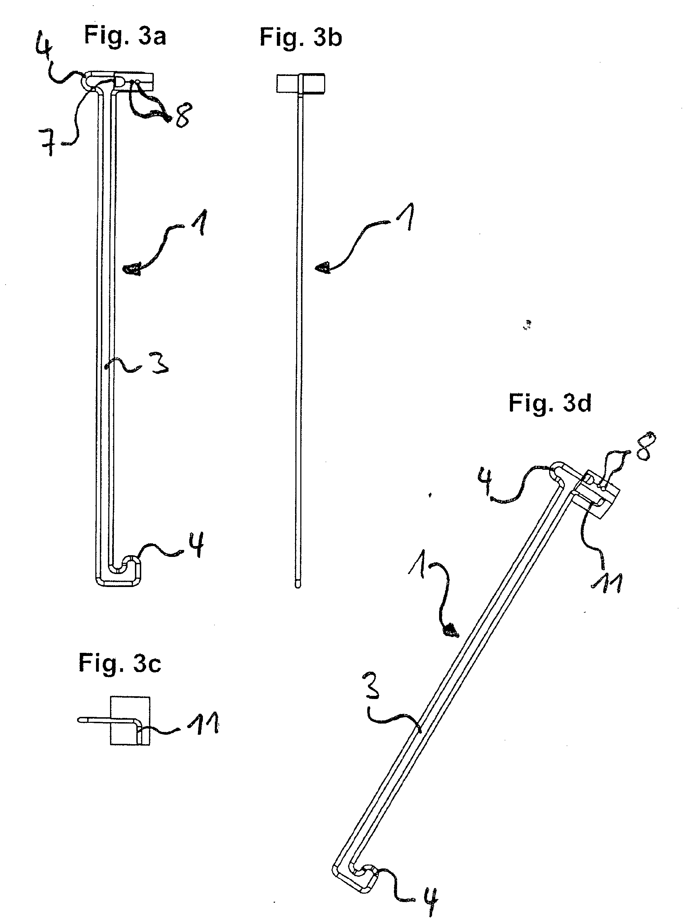

Figur 3a einen Längsschnitt durch die in Figur 1 dargestellte beispielhafte Ausführungsform eines erfindungsgemäßen Drahtdistanzhalters mit eingebrachter und zusammengeklappter Verschlussplatte, wie sie in Figur 2 dargestellt ist,
Figur 3b einen Längsschnitt in einer Ebene senkrecht zur Ebene des in
Figur 3a dargestellten Längsschnittes,
Figur 3c eine Detailansicht, die die Fixierung des einen Endes des Federstahldrahtes in der Verschlussplatte verdeutlicht, und
Figur 3d eine schematische Ansicht der in Figur 1 dargestellten beispielhaften Ausführungsform eines erfindungsgemäßen Drahtdistanzhalters 1 mit eingebrachter und zusammengeklappter Verschlussplatte, wie sie in Figur 2 dargestellt ist.

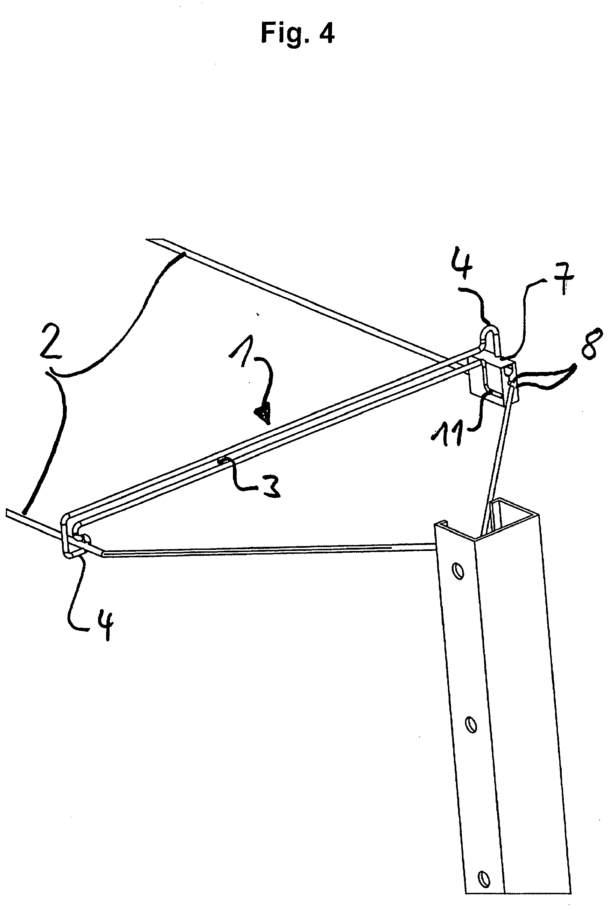

Figur 4 eine schematische Darstellung einer weiten Positionierung eines Drahtpaares durch den in den Figuren 3a bis 3d dargestellten Drahtdistanzhalter mit Verschlussplatte und

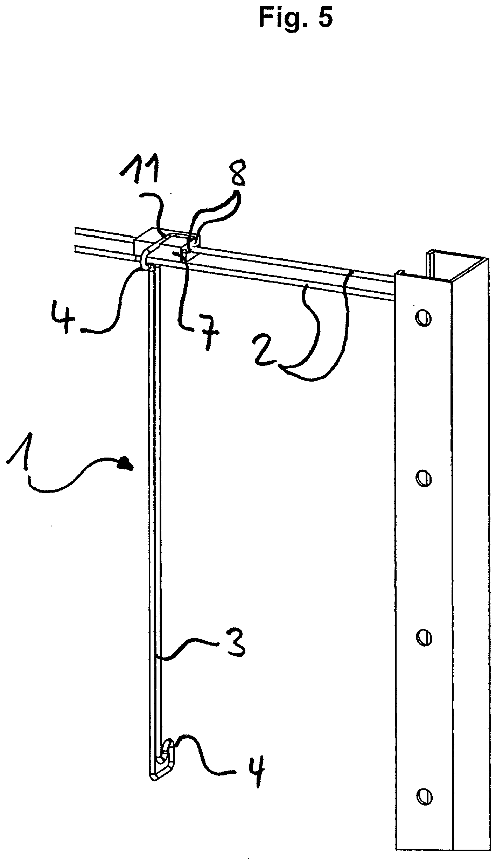

Figur 5 eine schematische Darstellung einer engen Positionierung eines Drahtpaares durch den in den Figuren 3a bis 3d dargestellten Drahtdistanzhalter mit Verschlussplatte.

In den Figuren bezeichnen gleiche Bezugszeichen jeweils gleiche Merkmale.

Die in Figur 1a im Längsschnitt dargestellte bevorzugte Ausführungsform eines erfindungsgemäßen Drahtdistanzhalters 1 weist einen sich in Längsrichtung desselben erstreckenden Führungsschlitz 3 zur Aufnahme eines in der Figur nicht dargestellten Drahtpaares 2 auf. Der Führungsschlitz 3 weist an seinen beiden Enden jeweils einen abgewinkelten Absatz 4 auf. In der in der Figur dargestellten bevorzugten Ausführungsform sind die an den beiden Enden des Führungsschlitzes ausgebildeten Absätze 4, die jeweils senkrecht zur Längsrichtung desselben abgewinkelt sind, in der Hauptebene des Drahtdistanzhalters 1 und zu einander entgegengesetzten Seiten des Drahtdistanzhalters 1 ausgerichtet. Die Figur zeigt ebenfalls die beiden abgewinkelten Enden 5 des Federstahldrahtes, die die Öffnung des Führungsschlitzes 3 begrenzen.

Der in Figur 1b dargestellte Längsschnitt in einer Ebene senkrecht zu der in Schnittebene in Figur 1a verdeutlicht, dass sich die den Führungsschlitz 3 begrenzenden Teile des Federstahldrahtes sowie die Absätze 4 in einer Ebene befinden, dass die beiden Enden 5 des Federstahldrahtes jedoch um 90 ° aus dieser Ebene heraus abgewinkelt sind.

Figur 2a zeigt eine beispielhafte Ausführungsform einer Verschlussplatte für einen erfindungsgemäßen Drahtdistanzhalter 1 mit einem mittigen Scharnier 7 in Querrichtung, wobei auf der in Figur 2a dargestellte ersten Großfläche parallel zum mittigen Scharnier 7 und zu diesem gleich beabstandet jeweils eine Vertiefung 8 mit jeweils gleichem, halbkreisförmigem Querschnitt zur Aufnahme des zu fixierenden Drahtes des Drahtpaares aufweist und darüber hinaus zwei weitere, ebenfalls parallel zum mittigen Scharnier 7 und zu diesem gleich beabstandet angeordnete Vertiefungen 8 mit vom Querschnitt der ersten Vertiefungen verschiedenen halbkreisförmigen Querschnitt zur alternativen Aufnahme eines zu fixierenden Drahtes des Drahtpaares mit anderem Durchmesser, vorgesehen sind.

Weiterhin sind an einem Ende ersten Großfläche zwei Zapfen 9 und am gegenüberliegenden Ende den zwei Zapfen 9 entsprechende Aussparungen 10 zum Verschließen der zusammenklappbaren Verschlussplatte vorgesehen.

Der in Figur 2b dargestellte Querschnitt in Längsrichtung zeigt das mittige Scharnier 7, die zwei Paare von Vertiefungen 8 mit jeweils gleichem, jedoch zwischen den Paaren unterschiedlichem, halbkreisförmigem Querschnitt zur Aufnahme des zu fixierenden Drahtes des Drahtpaares, wobei durch das Vorhandensein von zwei Paaren jeweils Drähte mit unterschiedlichem Durchmesser aufgenommen werden können, einen Zapfen 9, sowie angedeutet Vertiefungen 11 zur Aufnahme des Federstahldrahtes.

Auf der in Figur 2c dargestellten, der ersten gegenüberliegenden, zweiten Großfläche, sind das Scharnier 7 sowie die Vertiefungen 11, zur Aufnahme des Federstahldrahtes, dargestellt.

Figur 2d zeigt einen Querschnitt senkrecht hierzu, im Bereich der Zapfen 9, und
Figur 2e die Verschlussplatte in zusammengeklappter Form in schematischer Darstellung, mit Vertiefungen 8 zur Aufnahme des ersten Drahtes des Drahtpaares sowie Vertiefungen 11 zur Aufnahme des Federstahldrahtes.

Figur 3a zeigt einen Längsschnitt durch die in Figur 1 dargestellte beispielhafte Ausführungsform eines erfindungsgemäßen Drahtdistanzhalters 1 mit eingebrachter und zusammengeklappter Verschlussplatte, wie sie in Figur 2 dargestellt ist, mit Führungsschlitz 3, Absätzen 4 sowie Verschlussplatte mit Vertiefungen 8 zur Aufnahme des ersten, zu fixierenden Drahtes des Drahtpaares.

Figur 3b zeigt einen Längsschnitt in einer Ebene senkrecht zur Ebene des in Figur 3a dargestellten Längsschnittes,
Figur 3c eine Detailansicht, die die Fixierung des einen Endes des Federstahldrahtes in der Vertiefung 11 in der Verschlussplatte verdeutlicht, und
Figur 3d eine schematische Ansicht der in Figur 1 dargestellten beispielhaften Ausführungsform eines erfindungsgemäßen Drahtdistanzhalters 1 mit eingebrachter und zusammengeklappter Verschlussplatte, wie sie in Figur 2 dargestellt ist. In der Figur sind der Führungsschlitz 3, die Absätze 4, die Vertiefungen 8 in der zusammengeklappten Verschlussplatte zur Aufnahme des ersten, zu fixierenden Drahtes des Drahtpaares, sowie die Vertiefung 11 zur Aufnahme der Enden 5 des Federstahldrahtes zu erkennen.

Figur 4 zeigt eine schematische Darstellung einer weiten Positionierung eines Drahtpaares 2 durch den in den Figuren 3a bis 3d dargestellten Drahtdistanzhalter 1 mit Verschlussplatte, wobei der Führungsschlitz 3, die Absätze 4, die Vertiefungen 8 zur Aufnahme des zu fixierenden Drahtes des Drahtpaares 2 sowie die Vertiefung 11 zur Aufnahme der Enden 5 des Federstahldrahtes zu erkennen sind.
Die Figur verdeutlicht, dass der Drahtdistanzhalter 1 die beiden Drähte des Drahtpaares 2 parallel zueinander, in einer Position senkrecht zum demselben, fixiert.

Figur 5 zeigt eine schematische Darstellung einer engen Positionierung eines Drahtpaares durch den in den Figuren 3a bis 3d dargestellten Drahtdistanzhalter mit Verschlussplatte.

## Patentansprüche

1. Drahtdistanzhalter (1) zur variablen Positionierung von Drahtpaaren (2) in Spalieranlagen, insbesondere für den Weinbau, der in einer flachstabartigen Form aus einem Federstahldraht gebildet ist, mit einem, im Wesentlichen in Längsrichtung desselben angeordneten Führungsschlitz (3), wobei in dem Führungsschlitz (3) einer der beiden Drähte des Drahtpaares (2) gleitend verschiebbar ist, und wobei der Führungsschlitz (3) an beiden Enden desselben jeweils einen zur Längsrichtung desselben abgewinkelten Absatz (4) aufweist, dergestalt, dass der verschiebbare Draht in den Absätzen (4) arretierbar ist und wobei der in Längsrichtung des Stabes angeordnete Führungsschlitz (3), an einem Ende desselben eine verschließbare Öffnung zur Aufnahme der beiden Drähte des Drahtpaares (2) aufweist,
**dadurch gekennzeichnet, dass**
die verschließbare Öffnung zur Aufnahme der beiden Drähte des Drahtpaares (2) durch eine zur Längsrichtung des Drahtdistanzhalter (1) senkrechte und in der Hauptebene des Drahtdistanzhalters (1) liegenden Abwinkelung der beiden Enden (5) des Federstahldrahtes gebildet ist, und dass ein Verschluss (6) für dieselbe vorgesehen ist, der nach dem Einbringen der beiden Drähte des Drahtpaares (2) in den Führungsschlitz (3) den einen der beiden Drähte des Drahtpaares (2) dauerhaft in einer Ebene senkrecht zur Längsrichtung des Drahtdistanzhalters (1) fixiert und den Führungsschlitz (3) verschließt.

2. Drahtdistanzhalter (1) nach Anspruch 1, **dadurch gekennzeichnet, dass** die an beiden Enden des Führungsschlitzes (3) ausgebildeten Absätze (4), die jeweils senkrecht zur Längsrichtung desselben abgewinkelt sind, in der Hauptebene des Drahtdistanzhalters (1) und zu einander entgegengesetzten Seiten des Drahtdistanzhalters (1) ausgerichtet sind.

3. Drahtdistanzhalter (1) nach Anspruch 1 oder 2, **dadurch gekennzeichnet, dass** der Verschluss (6) in Form einer zusammenklappbaren Verschlussplatte ausgebildet ist, die den dauerhaft zu fixierenden einen Draht des Drahtpaares (2) aufnimmt und zwischen die beiden Enden (5) des Federstahldrahtes in einer Ebene senkrecht zur Längsrichtung des Drahtdistanzhalters (1) verklemmt.

4. Drahtdistanzhalter (1) nach einem der Ansprüche 1 bis 3, **dadurch gekennzeichnet, dass** die beiden Enden (5) des Federstahldrahtes nach der zur Längsrichtung des Drahtdistanzhalters (1) senkrechten und in der Hauptebene des Drahtdistanzhalters (1) liegenden Abwinkelung senkrecht zur Hauptebene des Drahtdistanzhalters (1) abgewinkelt sind.

5. Drahtdistanzhalter (1) nach einem der Ansprüche 1 bis 4, **dadurch gekennzeichnet, dass** die zusammenklappbaren Verschlussplatte, die den Verschluss (6) bildet, zwei einander gegenüberliegende, im Wesentlichen rechteckige Großflächen aufweist, mit einem mittigen Scharnier (7) in Querrichtung, wobei
- auf der einen Großfläche parallel zum mittigen Scharnier (7) und zu diesem gleich beabstandet jeweils eine Vertiefung (8) mit jeweils gleichem, halbkreisförmigem Querschnitt zur Aufnahme des zu fixierenden Drahtes des Drahtpaares (2) sowie an einem Ende derselben ein, zwei oder mehrere Zapfen und am gegenüberliegenden Ende dem einen, zwei oder mehreren Zapfen entsprechende Vertiefungen zum Verschließen der zusammenklappbaren Verschlussplatte und
- auf der gegenüberliegenden Großfläche symmetrisch zum mittigen Scharnier (7) den zwei Mal senkrecht zur Längsrichtung des Drahtdistanzhalters (1) abgewinkelten beiden Enden (5) des Federstahldrahtes entsprechende Vertiefungen zur Aufnahme derselben vorgesehen sind,
dergestalt, dass eine formschlüssige Fixierung des einen Drahtes des Drahtpaares (2) gewährleistet ist.

6. Drahtdistanzhalter (1) nach Anspruch 5, **dadurch gekennzeichnet, dass** auf der einen Großfläche der zusammenklappbaren Verschlussplatte, die parallel zum mittigen Scharnier (7) und zu diesem gleich beabstandet jeweils eine Vertiefung (8) mit jeweils gleichem halbkreisförmigem Querschnitt zur Aufnahme des zu fixierenden Drahtes des Drahtpaares (2) aufweist, an einem Ende derselben zwei Zapfen und am gegenüberliegenden Ende den zwei Zapfen entsprechende Vertiefungen zum Verschließen der zusammenklappbaren Verschlussplatte vorgesehen sind.

7. Drahtdistanzhalter (1) nach Anspruch 6, **dadurch gekennzeichnet, dass** auf der einen Großfläche der zusammenklappbaren Verschlussplatte, die parallel zum mittigen Scharnier (7) und zu diesem gleich beabstandet jeweils eine Vertiefung (8) mit jeweils gleichem, halbkreisförmigem Querschnitt zur Aufnahme des zu fixierenden Drahtes des Drahtpaares (2) aufweist, zwei weitere, ebenfalls parallel zum mittigen Scharnier (7) und zu diesem gleich beabstandet angeordnete Vertiefungen (8) mit vom Querschnitt der ersten Vertiefungen verschiedenen halbkreisförmigen Querschnitt zur Aufnahme des zu fixierenden Drahtes des Drahtpaares (2) vorgesehen sind.

8. Drahtdistanzhalter (1) nach einem der Ansprüche 1 bis 7, **dadurch gekennzeichnet, dass** der Führungsschlitz (3) eine oder mehrere Verengungen (5) aufweist, die ein Verschieben der Drähte nur unter erhöhtem Kraftaufwand erlauben.

9. Drahtdistanzhalter (1) nach einem der Ansprüche 1 bis 8, **dadurch gekennzeichnet, dass** der Federstahldraht einen Durchmesser von 1,5 bis 4,0 mm, insbesondere einen Durchmesser von 2,5 mm, aufweist.

10. Drahtdistanzhalter (1) nach einem der Ansprüche 1 bis 9, **dadurch gekennzeichnet, dass** er eine Länge im Bereich von 220 bis 350 mm, bevorzugt im Bereich von 250 bis 280 mm, besonders bevorzugt von 270 mm, aufweist.
